# EUROPÄISCHE PATENTSCHRIFT

(11) **EP 3 466 749 B1**
(45) Veröffentlichungstag und Bekanntmachung des Hinweises auf die Patenterteilung: **09.12.2020**
(21) Anmeldenummer: 18198783.5
(22) Anmeldetag: 05.10.2018
(51) Int. Cl.: H02J 7/34, B60L 53/14, H02J 7/00, B60L 53/53, B60L 53/10, B60L 53/30

(54) **EINSATZ VON ZWEI DC/DC-STELLERN IN DER LEISTUNGSELEKTRONIK EINER LADESTATION BZW. STROMTANKSTELLE**
USE OF TWO DC/DC ACTUATORS IN THE POWER ELECTRONICS OF A CHARGING STATION OR ELECTRICITY CHARGING POINT
UTILISATION DE DEUX RÉGULATEURS CC/CC DANS L'ÉLECTRONIQUE DE PUISSANCE D'UNE STATION DE CHARGE OU STATION DE RECHARGE

(30) Priorität: 06.10.2017 DE 102017217757
(43) Veröffentlichungstag der Anmeldung: 10.04.2019
(73) Patentinhaber: Dr. Ing. h.c. F. Porsche AG, 70435 Stuttgart (DE); ads-tec GmbH, 72622 Nürtingen (DE)
(72) Erfinder: HEYNE, Dr. Raoul, 75446 Wiernsheim (DE); JOSLOWSKI, Florian, 70771 Leinfelden-Echterdingen (DE); KIEFER, Michael, 70563 Stuttgart (DE); SPEIDEL, Thomas, 71706 Markgröningen (DE); NATOUR, Ali, 73269 Hochdorf (DE)
(74) Vertreter: Sturm, Christoph

(56) Entgegenhaltungen:
- EP-A1- 2 875 985
- WO-A1-2013/039753
- CN-A- 105 186 669
- DE-A1-102015 214 236
- US-A1- 2011 144 842
- US-A1- 2012 181 990

## Beschreibung

Die vorliegende Erfindung betrifft eine Ladestation einer Stromtankstelle und Stromtankstelle.

### Stand der Technik

Als Ladestation wird in der Elektrotechnik jedwede stationäre Vorrichtung oder elektrische Anlage bezeichnet, welche dazu dient, mobilen akkubetriebenen Geräten, Maschinen oder Kraftfahrzeugen durch einfaches Einstellen oder Einstecken Energie zuzuführen, ohne den Energiespeicher - etwa die Traktionsbatterie eines Elektroautos - zwangsläufig entnehmen zu müssen. Ladestationen für Elektroautos werden mitunter auch als "Stromtankstellen" bezeichnet und können mehrere Ladepunkte umfassen.

Bekannt sind hier insbesondere Gleichstrom-Schnellladesysteme (*high performance charging,* HPC) wie das in Europa verbreitete, sogenannte kombinierte Ladesystem (*combined charging system,* CCS). Beim gattungsmäßigen Gleichstromladen wird Gleichstrom aus der Ladesäule direkt in das Fahrzeug eingespeist und hierzu durch einen leistungsstarken Gleichrichter vom Stromnetz oder durch große Pufferakkumulatoren an z.B. Solartankstellen bereitgestellt. Im Fahrzeug befindet sich ein Batteriemanagementsystem, das mit der Ladesäule direkt oder indirekt kommuniziert, um die Stromstärke anzupassen oder bei Erreichung einer Kapazitätsgrenze den Vorgang zu beenden.

Die Leistungselektronik befindet sich hierbei üblicherweise in der Ladesäule. Da die Gleichstromanschlüsse der Ladesäule direkt mit entsprechenden Anschlüssen der Traktionsbatterie verbunden werden, lassen sich verlustarm hohe Ladeströme übertragen, was kurze Ladezeiten ermöglicht.

In den verschiedenen Ladestationen, die weltweit im Einsatz sind, werden die verschiedensten Topologien für die Leistungselektronik verwendet. Bekannt sind insbesondere Ladestationen, die einen Energiespeicher in Form einer Batterie zusätzlich verwenden. Aber auch für die Anbindung einer Batterie in der Leistungselektronik sind mehrere Topologien möglich.

So offenbaren etwa US 2015202973 und WO 15103164 Umrichter-Strukturen für eine Ladestation für Elektrofahrzeuge, die es erlauben, zusätzliche Energiespeicherbatterien in der jeweiligen Ladestation zu installieren. Die Anordnung besteht jeweils aus einem an das Netz angeschlossenen Gleichrichter, gefolgt von einem Gleichspannungswandler oder Gleichstromsteller. Die jeweilige Batterie ist einerseits mit dem Stromnetz und andererseits mit der Ladestation verbunden.

JP 2012019602, US 2015328999 und US 2012074901 beschreiben weitere Schnellladesäulen zum Aufladen von Elektrofahrzeugen mit zusätzlichen Energiespeicherbatterien.

US 2015061569 sowie US 2008067974 schließlich erörtern jeweils eine Fahrzeugladestation mit zusätzlichem Energiespeicher und über einen Umrichter verbundenem Netzanschluss.

Weiterer Stand der Technik ist aus der US 20127181990 A1, aus EP 2 875 985 A1, WO 2013/039753 A1 und CN 105 186 669 A1 bekannt.

### Offenbarung der Erfindung

Die Erfindung stellt eine Ladestation einer Stromtankstelle nach Anspruch 1 sowie eine Stromtankstelle nach Anspruch 2 bereit.

Die hier verwendete Lösung mit zwei DC/DC-Stellern nach der galvanischen Trennung hat den Vorteil, dass der eine DC-Steller nur für die Batterie und der andere für die Ladung des Fahrzeugs zuständig ist. Dadurch kann der Spannungsbereich der Batterie optimal genutzt werden. Dies wiederum ermöglicht es, die maximale Batteriekapazität für die Ladung zu verwenden.

Eine solche Topologie ist auf den ersten Blick ungewöhnlich, weil der Eindruck entstehen mag, als könne man einen DC/DC-Steller einsparen; allerdings stellt sie eine sehr effiziente Lösung dar.

Der vorgeschlagene Ansatz fußt auf der Erkenntnis, dass die Einbindung einer Speicherbatterie in die Ladesäule an vielen verschiedenen Anbindungen in der Topologie der Leistungselektronik erfolgen kann. Es muss hierbei darauf geachtet werden, dass die Speicherbatterie effizient eingebaut wird. Weiter sollte diese so integriert werden, dass die Speicherbatterie im gleichen Gehäuse wie der Rest der Leistungselektronik angeordnet ist, um eine kompakte Vorrichtung zu schaffen.

Die Erfindung trägt ferner dem Umstand Rechnung, dass die meisten bekannten Ladelösungen Ladesäulen anbieten, die die benötigte Ladeenergie direkt aus dem Netz beziehen und somit keinen zusätzlichen Speicher aufweisen. Ein zusätzlicher Speicher kann bei diesen Ladesäulen sehr einfach hinzugefügt werden, indem er AC-seitig mit dem Netz und der Ladesäule verbunden wird. Dies ist nicht unbedingt die effizienteste Lösung. Zusätzliche Speicher sind zudem häufig nicht im gleichen Gehäuse wie die Ladesäule untergebracht, was mehr Aufstellungsaufwand bedingt. Häufig haben die Ladesäulen ferner eine bestimmte Mindestgröße, weil Topologien mit veralteten IGBT-Technologien verwendet werden. Diese sind günstig, benötigen jedoch mehr Bauraum. Zusätzlich integrierte Speicher werden zudem nicht immer so integriert, dass der Spannungsbereich und damit die optimale Speicherkapazität komplett genutzt werden kann.

Ein Vorzug der hier offenbarten Erfindung liegt demgegenüber in der eröffneten Möglichkeit, den Energiespeicher - hier eine Batterie - im selben Gehäuse wie die Ladesäule zu verbauen, um den Installationsaufwand zu minimieren. Die Gesamtlösung ist zudem sehr kompakt, um die Sicht im Straßenverkehr nicht nennenswert zu behindern. Dies erfordert den Einsatz von sehr schnellen Umrichter-Topologien mit hohen Schaltfrequenzen, was wiederum den Einsatz von SiC-MOS-Modulen bedingt. Die Batterie ist hierbei im DC-Teil untergebracht, was die Effizienz der Ladestation verbessert und ihre Herstellungskosten senkt.

Weitere vorteilhafte Ausgestaltungen der Erfindung sind in den abhängigen Patentansprüchen angegeben.

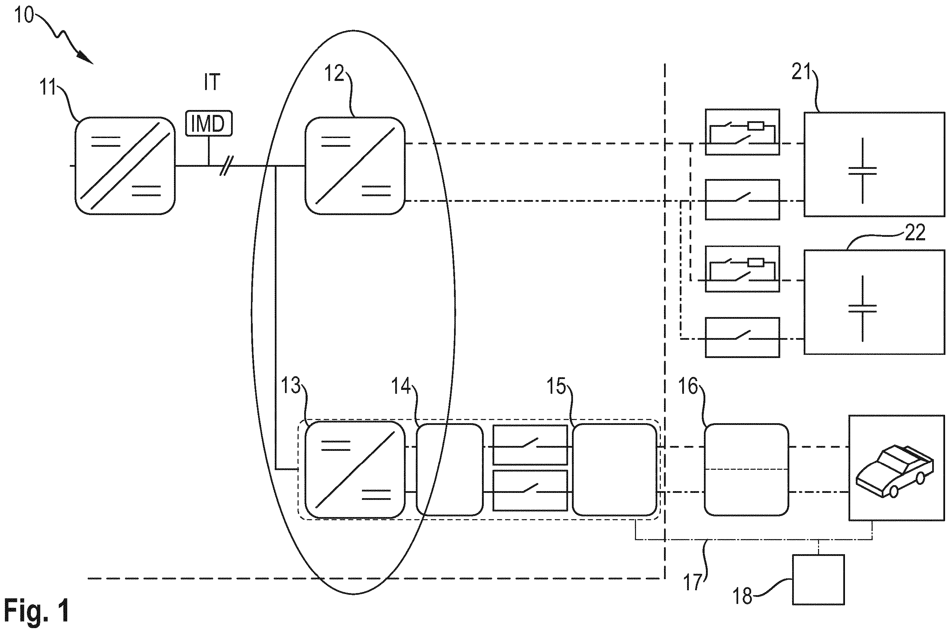

### Kurze Beschreibung der Zeichnung

Ein Ausführungsbeispiel der Erfindung ist in der Zeichnung dargestellt und wird im Folgenden näher beschrieben.

Die einzige Figur zeigt eine erfindungsgemäße Umrichter-Konstellation.

### Ausführungsformen der Erfindung

Die Abbildung illustriert exemplarisch eine mit einer erfindungsgemäßen Ladestation (10) ausgestattete Stromtankstelle. Ein zeichnerisch nicht dargestellter Gleichrichter (*AC*/*DC converter*) dient hierbei in der Regel zum Anschluss an das öffentliche TN- oder TT-Niederspannungsnetz. Ein mit besagtem Gleichrichter verbundener, erster Gleichspannungswandler (*DC*/*DC converter* 11) überführt die Spannung zum Schutz vor Erdschlussfehlern in das interne IT-Netz der Ladestation (10).

An dieser Stelle trennen sich innerhalb der Ladestation (10) im Wesentlichen zwei erfindungswesentliche Leistungspfade: Ein erster Gleichstromsteller (12) speist die angeschlossene, abbildungsgemäß zwei Stränge (21, 22) umfassende Batterie (21, 22) und erlaubt die Rückspeisung der solchermaßen gespeicherten Energie zum beschleunigten Laden angeschlossener Fahrzeuge. Für deren Versorgung sind ein zweiter Gleichstromsteller (13) im Ausführungsbeispiel mit nachgeschaltetem DC-EMV-Filter (14) und ein - vorzugsweise im Lückbetrieb (*discontinuous current mode, discontinuous conduction mode,* DCM) betriebener - zweiter Gleichspannungswandler (15) vorgesehen, die über geeignet geschützte Anschlussleitungen zur Leistungsübertragung verfügen. Je nach Ladestandard und -spannung kann die zugehörige Pilotleitung (17) mit einem Überspannungsschutz (18) versehen sein.

Jeder Strang (21, 22) der Batterie umfasst jeweils mehrere Batteriemodule und jedes Batteriemodul des jeweiligen Strangs (21, 22) umfasst mehrere Batteriezellen. In jedem Batteriemodul sind die Batteriezellen des jeweiligen Batteriemoduls in Reihe geschaltet. In jedem Strang (21, 22) sind die Batteriemodule des jeweiligen Strangs (21, 22) in Reihe geschaltet. Die Stränge (21, 22) der Batterie können parallel geschaltet sein oder unabhängig betrieben werden. Wirken beide Stränge (21, 22) mit einer gemeinsamen Leistungselektronik oder zusammengeschalteten Leistungselektroniken zusammen, so sind die Stränge (21, 22) der Batterie parallel geschaltet. Wirkt jeder der Stränge (21, 22) mit einer individuellen Leistungselektronik zusammen, so sind die Stränge (21, 22) der Batterie nicht parallel geschaltet sondern werden unabhängig betrieben.

## Patentansprüche

1. Ladestation (10) einer Stromtankstelle, umfassend folgende Merkmale:
- einen ersten Gleichspannungswandler (11) zur Spannungsversorgung der Ladestation (10),
- einen mit dem ersten Gleichspannungswandler (11) verbundenen ersten Gleichstromsteller (12) eines ersten Leistungspfads zum Anschließen einer Batterie (21, 22) an die Ladestation (10) und für die Rückspeisung von in der Batterie (11, 12) gespeicherter Energie zum beschleunigten Laden eines Elektroautos, und
- einen mit dem ersten Gleichspannungswandler (11) verbundenen zweiten Gleichstromsteller (13) eines zweiten Leistungspfads, einen dem zweiten Gleichstromsteller (13) nachgeschaltetes EMV-Filter (14) und einem dem EMV-Filter (14) nachgeschalteten, in einem Lückbetrieb betriebenen zweiten Gleichspannungswandler (15) zum Anschließen des Elektroautos an die Ladestation (10) für das Laden des Elektroautos.

2. Stromtankstelle,
**gekennzeichnet durch** folgendes Merkmal:
- eine Ladestation (10) nach Anspruch 1.

3. Stromtankstelle nach Anspruch 2,
**gekennzeichnet durch** folgendes Merkmal:
- eine an den ersten Gleichstromsteller (12) angeschlossene Batterie (21, 22).

4. Stromtankstelle nach Anspruch 3,
**gekennzeichnet durch** folgendes Merkmal:
- die Batterie (21, 22) umfasst mehrere Stränge (21, 22) .

## Claims

1. Charging station (10) of an electricity charging point,
comprising the following features:
- a first DC-to-DC voltage converter (11) for the voltage supply of the charging station (10),
- a first DC chopper (12), connected to the first DC-to-DC voltage converter (11), of a first power path for connecting a battery (21, 22) to the charging station (10) and for returning energy stored in the battery (11, 12) for faster charging of an electric car, and
- a second DC chopper (13), connected to the first DC-to-DC voltage converter (11), of a second power path, an EMC filter (14) connected downstream of the second DC chopper (13) and a second DC-to-DC voltage converter (15), connected downstream of the EMC filter (14) and operated in a discontinuous conduction mode, for connecting the electric car to the charging station (10) in order to charge the electric car.

2. Electricity charging point,
**characterized by** the following feature:
- a charging station (10) according to Claim 1.

3. Electricity charging station according to Claim 2, **characterized by** the following feature:
- a battery (21, 22) connected to the first DC chopper (12) .

4. Electricity charging point according to Claim 3, **characterized by** the following feature:
- the battery (21, 22) comprises a plurality of strings (21, 22).

## Revendications

1. Borne de charge (10) d'une station de recharge, comprenant les caractéristiques suivantes :
- un premier convertisseur de tension continue (11) pour l'alimentation en tension de la borne de charge (10),
- un premier régulateur de courant continu (12), connecté au premier convertisseur de tension continue (11), d'un premier chemin de puissance pour le raccordement d'une batterie (21, 22) à la borne de charge (10) et pour le recyclage de l'énergie stockée dans la batterie (11, 12) pour une charge accélérée d'un véhicule électrique, et
- un deuxième régulateur de courant continu (13), connecté au premier convertisseur de tension continue (11), d'un deuxième chemin de puissance, un filtre EMC (14) monté en aval du deuxième régulateur de courant continu (13) et un deuxième convertisseur de tension continue (15) monté en aval du filtre EMC (14), fonctionnant en mode de courant discontinu, pour le raccordement du véhicule électrique à la borne de charge (10) pour charger le véhicule électrique.

2. Station de recharge, **caractérisée par** la caractéristique suivante :
- une borne de charge (10) selon la revendication 1.

3. Station de recharge selon la revendication 2, **caractérisée par** la caractéristique suivante :
- une batterie (21, 22) raccordée au premier régulateur de courant continu (12).

4. Station de recharge selon la revendication 3, **caractérisée par** la caractéristique suivante :
- la batterie (21, 22) comprend plusieurs branches (21, 22).
